# FASCICULE DE BREVET EUROPEEN

(11) **EP 1 206 221 B1**
(45) Date de publication et mention de la délivrance du brevet: **17.05.2006**
(21) Numéro de dépôt: 00945516.3
(22) Date de dépôt: 31.07.2000
(51) Int. Cl.: A61C 5/02

(54) **DISPOSITIF ET PROCEDE D'ENREGISTREMENT DE L'UTILISATION D'UN INSTRUMENT ODONTOLOGIQUE**
VORRICHTUNG UND VERFAHREN ZUR REGISTRIERUNG DES GEBRAUCHS EINES ODONTOLOGISCHEN INSTRUMENTS
DEVICE AND METHOD FOR REGISTERING THE USE OF AN ODONTOLOGICAL INSTRUMENT

(30) Priorité: 06.08.1999 FR 9910348
(43) Date de publication de la demande: 22.05.2002
(73) Titulaire: Rouiller, Jean-Claude, 2300 La Chaux-de-Fonds (CH)
(72) Inventeur: ROUILLER, Jean-Claude, CH-2300 La Chaux-de-Fonds (CH); BREGUET, Olivier, CH-2400 Le Locle (CH)
(74) Mandataire: Nithardt, Roland
(86) Numéro de dépôt international: PCT/CH2000/000411
(87) Numéro de publication internationale: WO 2001/010329

(56) Documents cités:
- US-A- 4 733 361
- US-A- 4 882 867
- US-A- 5 414 777
- US-A- 5 464 362

## Description

### DOMAINE TECHNIQUE

La présente invention concerne un dispositif et un procédé de contrôle de la fatigue d'un instrument odontologique comme divulgué dans US 5 464 362 comportant au moins une zone coupante et une poignée.

### TECHNIQUE ANTERIEURE

Dans le domaine de l'odontologie, les chirurgiens utilisent divers instruments d'excavation du canal dentaire avant l'introduction d'un produit de remplissage dans ce canal.

Les instruments d'excavation du canal dentaire doivent satisfaire à des exigences très élevées. Ils doivent être coupants sur au moins une partie de leur longueur, doivent pouvoir être guidés facilement dans le canal dentaire par leur extrémité distale, même lorsque ce canal présente un rayon de courbure faible, et éviter l'effet de vissage. C'est pourquoi ces instruments sont connus comme étant des instruments délicats qui sont de préférence utilisés manuellement pour éviter toute rupture qui pourrait facilement résulter d'une utilisation au moyen d'un moteur.

Un alliage de nickel et de titane est connu par le brevet américain N°5,628,674 comme étant bien adapté pour la fabrication de tels outils. Il permet en effet la réalisation d'outils souples et résistants qui rendent possible l'entraînement motorisé de l'instrument lors de l'excavation de canaux dentaires. Les instruments réalisés dans cet alliage ont toutefois un inconvénient important. Du fait de leur souplesse, ils ne présentent aucune déformation permanente indiquant qu'ils doivent être remplacés. Ils ont donc toujours un aspect semblable, même lorsqu'ils ont atteint une limite de fatigue. Lorsque cette fatigue devient trop importante, ils cassent brusquement sans qu'aucun signe visible ne laisse présager du moment de la rupture. Ceci pose de sérieux problèmes à l'utilisateur de tels instruments.

### EXPOSE DE L'INVENTION

La présente invention se propose de pallier cet inconvénient en réalisant un dispositif qui permet de contrôler de façon simple la fatigue de chaque instrument, de manière à le remplacer avant qu'il ne présente un risque de rupture.

Ce but est atteint par un dispositif tel que défini en préambule et caractérisé en ce qu'il comporte des moyens liés audit instrument odontologique agencés pour indiquer une valeur représentative de la fatigue actuelle de cet instrument, des moyens pour modifier cette valeur en fonction de paramètres liés à l'utilisation de l'instrument odontologique et des moyens pour indiquer qu'une valeur de seuil est atteinte.

Selon un mode de réalisation préféré, lesdits moyens pour indiquer une valeur représentative de la fatigue actuelle comportent une rondelle.

Selon une première forme de réalisation, la rondelle comporte un nombre prédéfini de préperforations.

Selon une deuxième forme de réalisation, la rondelle comporte un nombre prédéfini de protubérances détachables.

Selon une forme de réalisation particulière de l'invention, lesdits moyens pour indiquer une valeur représentative de la fatigue actuelle comportent un code agencé pour identifier cet instrument de façon univoque et y associer une valeur représentative de sa fatigue actuelle, et le dispositif de contrôle comporte un dispositif de mémorisation agencé pour mémoriser la valeur de la fatigue actuelle de chaque instrument.

Le dispositif de contrôle comporte avantageusement un dispositif de lecture agencé pour lire ledit code.

Selon une forme de réalisation avantageuse, le dispositif de contrôle comporte une rondelle d'arrêt, ledit code étant placé sur cette rondelle d'arrêt.

Ledit code est avantageusement un code-barres.

Le but de l'invention est également atteint par un procédé tel que défini en préambule et caractérisé en ce qu'il comporte une étape de détermination d'une valeur représentative de la fatigue actuelle de l'instrument odontologique, une étape de détermination d'une valeur de fatigue pour une opération donnée, dépendant de paramètres d'utilisation de l'instrument, une étape de modification de la valeur représentative de la fatigue actuelle en fonction de la valeur de fatigue pour ladite opération donnée, et une étape de comparaison de la nouvelle valeur modifiée représentative de la fatigue actuelle avec une valeur de seuil.

Selon une forme de réalisation avantageuse du procédé de l'invention, l'on utilise le rayon de courbure du canal dentaire, la conicité de l'instrument et/ou la durée de ladite opération donnée comme paramètre lié à l'utilisation de l'instrument.

Selon un premier mode de réalisation avantageux, dans lequel l'instrument odontologique comporte une rondelle munie de préperforations, l'étape de modification de la valeur représentative de la fatigue actuelle consiste à perforer un nombre de préperforations dépendant de la valeur de fatigue pour l'opération donnée.

Selon un deuxième mode de réalisation avantageux, dans lequel l'instrument odontologique comporte une rondelle munie de protubérances détachables, l'étape de modification de la valeur représentative de la fatigue actuelle consiste à détacher un nombre de protubérances dépendant de la valeur de fatigue pour l'opération donnée.

Selon un troisième mode de réalisation avantageux, lequel l'instrument odontologique comporte un code, l'étape de modification de la valeur représentative de la fatigue actuelle consiste à modifier dans un dispositif de mémorisation, la valeur de la fatigue actuelle en fonction de la valeur de fatigue pour l'opération donnée.

### DESCRIPTION SOMMAIRE DES DESSINS

La présente invention et ses avantages seront mieux compris en référence à différents modes de réalisation et aux dessins annexés dans lesquels:
- la figure 1 est une vue latérale d'un instrument d'excavation du canal dentaire selon l'art antérieur;
- la figure 2 est une vue latérale d'un instrument d'excavation du canal dentaire selon un premier mode de réalisation de l'invention;
- la figure 3 illustre une vue de face agrandie d'une rondelle selon un premier mode de réalisation de l'invention;
- la figure 4 est une vue en coupe selon la ligne A-A de la figure 3;
- la figure 5 est une vue de face d'une rondelle selon un deuxième mode de réalisation de l'invention;
- la figure 6 est une vue en coupe selon la ligne B-B de la figure 5;
- les figures 7 à 9 sont des vues de face d'une rondelle selon différents modes de réalisation de l'invention;
- la figure 10 est une vue de face d'une rondelle selon une variante de réalisation de l'invention;
- la figure 11 illustre de façon schématique le fonctionnement du dispositif de l'invention avec une rondelle telle que représentée par la figure 10; et
- la figure 12 illustre un instrument d'excavation du canal dentaire monté sur un foret de chirurgie dentaire.

### MANIERES DE REALISER L'INVENTION

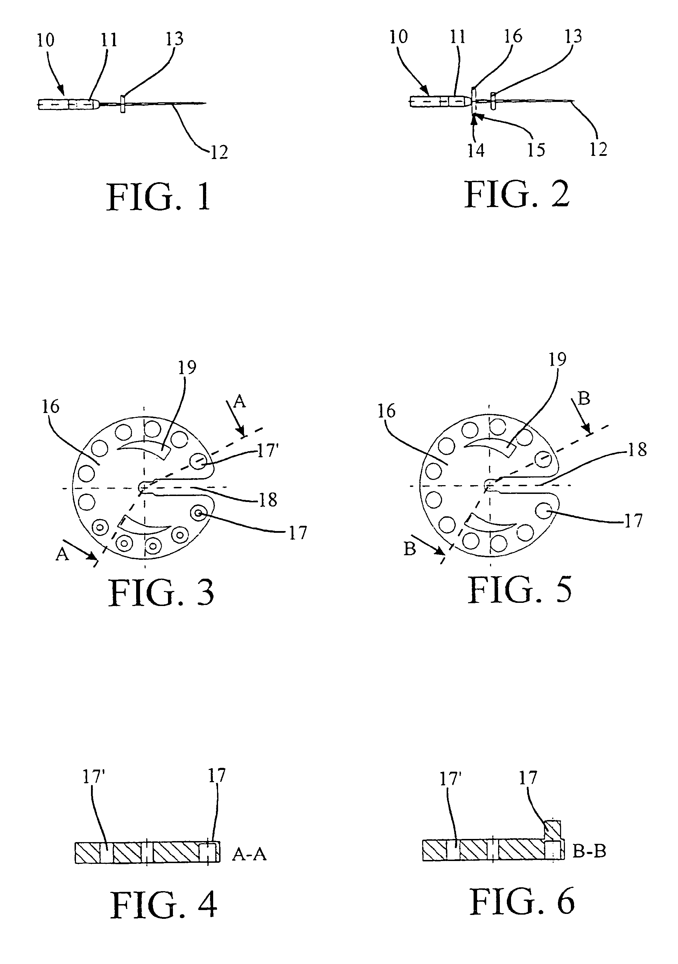

La figure 1 illustre un instrument odontologique 10 tel qu'utilisé avec un dispositif selon la présente invention. Cet instrument 10 comporte une poignée 11, une zone coupante 12 ou une lame, dont la longueur de fonctionnement peut être limitée par une rondelle d'arrêt 13. Cette rondelle d'arrêt 13 est coulissante sur la zone coupante 12. Elle peut également être supprimée. En fonction de l'utilisation prévue, la zone coupante 12 peut avoir une certaine conicité, généralement comprise entre 2° et 5°.

En référence aux figures 2 à 10, le dispositif 14 selon la présente invention comporte des moyens 15 liés audit instrument odontologique agencés pour indiquer une valeur représentative de la fatigue actuelle de cet instrument, des moyens pour modifier cette valeur en fonction de paramètres liés à l'utilisation de l'instrument odontologique et des moyens pour indiquer qu'une valeur de seuil est atteinte.

Les moyens 15 pour indiquer une valeur de la fatigue actuelle comportent essentiellement une rondelle 16. Dans les modes de réalisation illustrés par les figures 3 à 6, la rondelle comporte des préperforations 17. Lorsque l'instrument n'a jamais été utilisé et que la fatigue actuelle est donc nulle toutes les préperforations sont intactes.

Lorsque le chirurgien doit utiliser l'instrument odontologique pour une opération donnée il estime la fatigue que cette opération fera subir à l'instrument. Cette estimation dépend de différents paramètres d'utilisation de l'instrument, en particulier du rayon de courbure du canal dentaire à excaver de la conicité de l'instrument et de la durée prévue de l'opération.

Cette fatigue est transformée en une valeur de fatigue pour l'opération donnée. Dans les modes de réalisation illustrés, la valeur de fatigue peut varier de 1 à 12, 1 représentant une fatigue faible et 12 une grande fatigue. Cette valeur de fatigue correspond au nombre de préperforations 17 que le chirurgien doit perforer dans la rondelle. La référence 17' sur les figures 4 et 5 correspond à des perforations faites par le chirurgien à la suite d'une utilisation de l'instrument.

En fonction de la valeur de fatigue obtenue et de la valeur actuelle de la fatigue de l'instrument, le chirurgien peut déterminer si l'instrument est adapté à l'opération à effectuer. En effet, si le nombre de préperforations intactes sur une rondelle est inférieur à la valeur de fatigue déterminée, l'instrument ne pourra pas être utilisé sans risque de rupture. Un autre instrument devra donc être choisi.

Dans les modes de réalisation illustrés par les figures 3 à 6, la rondelle comporte une encoche 18 et deux flèches 19. Ces éléments permettent de déterminer un point de départ et un sens de la décrémentation. Ceci permet d'éviter de percer toutes les préperforations, et de percer uniquement la dernière. Dans le cas où, par exemple, la valeur de fatigue estimée est de 6, il est possible de percer uniquement la 6ème préperforation sans percer les cinq qui précèdent. Bien que n'étant pas indispensable, ceci peut simplifier l'utilisation du dispositif.

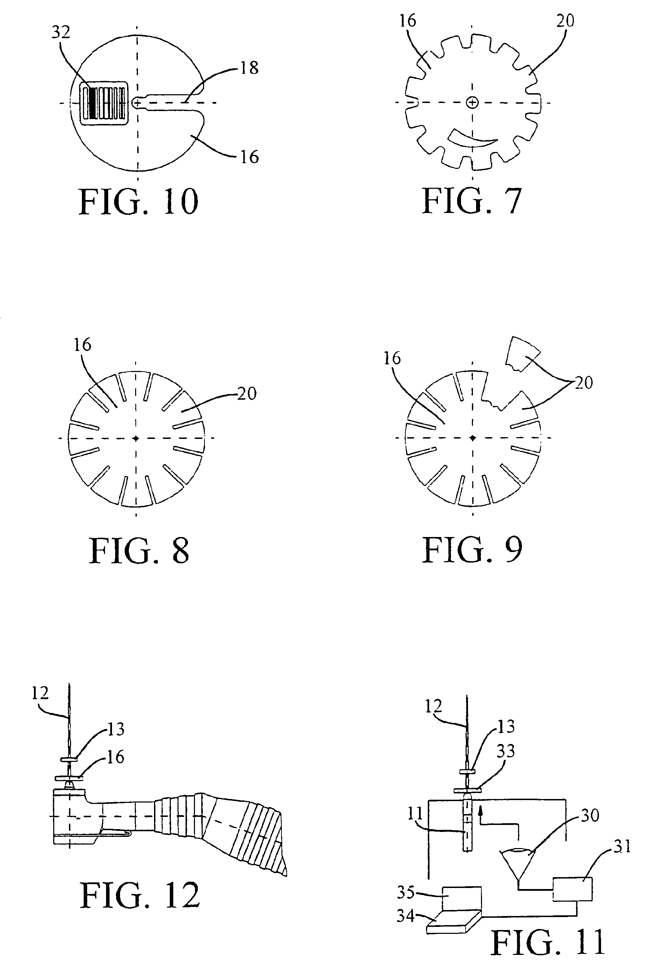

Les figures 7 à 9 illustrent différents modes de réalisation de l'invention, dans lesquels l'information concernant la valeur de la fatigue actuelle est représentée par un nombre de protubérances détachables 20. Ces protubérances 20 sont réparties le long de la périphérie de la rondelle 16 et peuvent être réalisées par exemple par extrusion ou par découpage.

La base de ces protubérances constitue une zone de moindre résistance de sorte que chacune d'elles peut facilement être détachée par le chirurgien au moyen d'un outil conventionnel tel qu'une pince. Le nombre de protubérances restantes sur la rondelle correspond à la valeur de la fatigue actuelle.

Les modes de réalisation illustrés par ces figures ont l'avantage de permettre une visualisation immédiate de la fatigue actuelle.

Les figures 10 et 11 illustrent un autre mode de réalisation de l'invention, dans lequel l'information peut être lue au moyen d'un lecteur 30 de code électronique tel que notamment un code-barres. Ce mode de réalisation est particulièrement adapté pour des instruments qui ont des vitesses de rotation très élevées et dans lesquels les protubérances cassées risqueraient d'affecter la dynamique du foret en créant des vibrations. Dans ce mode de réalisation, l'information concernant la fatigue n'est pas stockée sur l'instrument, mais sur un dispositif de mémorisation 31.

Un code-barres 32 est lié à l'instrument, et positionné soit sur une rondelle d'arrêt telle que celle portant la référence 13 sur la figure 1, soit sur une autre rondelle 33 liée à l'instrument. Ce code-barres 32 comporte au moins une information permettant d'identifier de façon univoque l'instrument.

Le dispositif de mémorisation 31 contient, en regard de chaque instrument identifié, une valeur représentative de la fatigue actuelle de l'instrument et une valeur de seuil à ne pas dépasser.

Avant d'utiliser l'instrument pour une opération donnée, le chirurgien estime la valeur de fatigue de l'opération. Il introduit cette valeur dans un dispositif de traitement d'informations 34 qui effectue une lecture de la valeur de la fatigue actuelle de l'instrument, modifie cette valeur en fonction de l'estimation du chirurgien et compare la valeur modifiée à la valeur de seuil.

Si la valeur modifiée dépasse la valeur de seuil, l'outil est jugé inutilisable pour l'opération donnée. Il pourra en revanche être utilisé pour une opération provoquant une fatigue moins importante. La valeur de fatigue de l'instrument peut par exemple être indiquée au moyen d'un affichage 35 adéquat, tel qu'un écran d'ordinateur ou un affichage à cristaux liquides.

Dans ce mode de réalisation, la valeur de fatigue peut être décrémentée depuis une valeur d'origine, par exemple 12, jusqu'à une valeur de seuil, par exemple 0 comme dans les modes de réalisation précédents. Elle pourrait également être incrémentée depuis une valeur d'origine, par exemple 0, jusqu'à une valeur de seuil par exemple 100. Ce mode de réalisation permet une subdivision plus fine de la valeur de fatigue. En effet, contrairement aux modes de réalisation illustrés par les figures 2 à 9, il n'y a pas de contraintes géométriques limitant la valeur maximale de la fatigue.

Il est clair que pour afficher une information fiable, la rondelle portant les indications concernant la fatigue doit être liée à l'instrument et ne doit pas pouvoir s'en désolidariser par inadvertance. D'autre part, comme l'instrument est stérilisé après chaque utilisation, cette rondelle doit être réalisée de façon à pouvoir supporter cette opération sans perdre les informations qu'elle contient et sans tomber du foret. Le silicone est une matière particulièrement bien adaptée à ces contraintes.

La rondelle peut comporter des indications facilitant l'estimation de la fatigue par le chirurgien. Une telle indication pourrait être la couleur de la rondelle, indiquant l'angle de cône de l'instrument.

Les moyens 15 pour indiquer une valeur de la fatigue actuelle ont été illustrés sous forme de rondelle. Il est clair que d'autres formes pourraient également être utilisées pour autant qu'elles ne génèrent pas des vibrations importantes du foret lors de son utilisation. Ces moyens ont été réalisés sur une rondelle 16 indépendante de la rondelle d'arrêt 13. La rondelle 16 et cette rondelle d'arrêt 13 pourraient également être constituées d'une seule et même pièce.

Dans les exemples illustrés par les figures 10 et 11, le code utilisé est un code-barres. D'autres types de codage d'informations pourraient également être intégrés à la rondelle 16. Un dispositif de lecture adapté doit bien entendu être prévu.

## Revendications

1. Dispositif de contrôle de la fatigue d'un instrument odontologique comportant au moins une zone coupante (12) et une poignée (11), **caractérisé en ce qu'**il comporte des moyens liés audit instrument odontologique (10) agencés pour indiquer une valeur représentative de la fatigue actuelle de cet instrument, des moyens pour modifier cette valeur en fonction de paramètres liés à son utilisation et des moyens pour indiquer qu'une valeur de seuil est atteinte.

2. Dispositif de contrôle selon la revendication 1, **caractérisé en ce que** lesdits moyens (15) pour indiquer une valeur représentative de la fatigue actuelle de l'instrument (10) comportent une rondelle (16, 33).

3. Dispositif de contrôle selon la revendication 2, **caractérisé en ce que** la rondelle (16) comporte un nombre prédéfini de préperforations (17).

4. Dispositif de contrôle selon la revendication 2, **caractérisé en ce que** la rondelle (16) comporte un nombre prédéfini de protubérances détachables (20).

5. Dispositif de contrôle selon la revendication 1, **caractérisé en ce que** lesdits moyens (15) pour indiquer une valeur représentative de la fatigue actuelle comportent un code (32) agencé pour identifier cet instrument de façon univoque et y associer une valeur représentative de sa fatigue actuelle, et **en ce que** ledit dispositif de contrôle comporte un dispositif de mémorisation (31) agencé pour mémoriser la valeur de la fatigue actuelle de chaque instrument.

6. Dispositif de contrôle selon la revendication 5, **caractérisé en ce qu'**il comporte un dispositif de lecture (30) agencé pour lire ledit code (32).

7. Dispositif de contrôle selon la revendication 5, **caractérisé en ce qu'**il comporte une rondelle d'arrêt (13), ledit code (32) étant placé sur cette rondelle d'arrêt.

8. Dispositif de contrôle selon les revendications 5 à 7, **caractérisé en ce que** ledit code est un code-barres.

9. Procédé de contrôle de la fatigue d'un instrument odontologique formé au moins d'une zone coupante et d'une poignée, **caractérisé en ce qu'**il comporte
• une étape de détermination d'une valeur représentative de la fatigue actuelle de l'instrument odontologique,
• une étape de détermination d'une valeur de fatigue pour une opération donnée, dépendant de paramètres d'utilisation de l'instrument,
• une étape de modification de la valeur représentative de la fatigue actuelle en fonction de la valeur de fatigue pour ladite opération donnée,
• une étape de comparaison de la nouvelle valeur modifiée représentative de la fatigue actuelle avec une valeur de seuil.

10. Procédé de contrôle selon la revendication 9, **caractérisé en ce que** l'on utilise le rayon de courbure du canal dentaire comme paramètre lié à l'utilisation de l'instrument.

11. Procédé de contrôle selon la revendication 9, **caractérisé en ce que** l'on utilise la conicité de l'instrument comme paramètre lié à son utilisation.

12. Procédé de contrôle selon la revendication 9, **caractérisé en ce que** l'on utilise la durée de ladite opération donnée comme paramètre lié à l'utilisation de l'instrument.

13. Procédé de contrôle selon la revendication 9, dans lequel l'instrument odontologique (10) comporte une rondelle (16) munie de préperforations (17), **caractérisé en ce que** l'étape de modification de la valeur représentative de la fatigue actuelle consiste à perforer un nombre de préperforations (17) dépendant de la valeur de fatigue pour l'opération donnée.

14. Procédé de contrôle selon la revendication 9, dans lequel l'instrument odontologique (10) comporte une rondelle (16) munie de protubérances détachables (20), **caractérisé en ce que** l'étape de modification de la valeur représentative de la fatigue actuelle consiste à détacher un nombre de protubérances (20) dépendant de la valeur de fatigue pour l'opération donnée.

15. Procédé de contrôle selon la revendication 9, dans lequel l'instrument odontologique (10) comporte un code (32), **caractérisé en ce que** l'étape de modification de la valeur représentative de la fatigue actuelle consiste à modifier dans un dispositif de mémorisation (31), la valeur de la fatigue actuelle en fonction de la valeur de fatigue pour l'opération donnée.

## Claims

1. Control device of the current fatigue of an odontological instrument having at least a cutting zone (12) and a handle (11), **characterized in that** it comprises means connected to said odontological instrument (10) designed to indicate a value representing the current fatigue of this instrument, means for modifying this value according to parameters corresponding to the use of the odontological instrument and means for indicating that a limit value is reached.

2. Control device according to claim 1, **characterized in that** said means (15) indicating a value representing the current fatigue of the instrument (10) comprises a washer (16, 33).

3. Control device according to claim 2, **characterized in that** the washer (16) comprises a predetermined number of pre-perforations (17).

4. Control device according to claim 2, **characterized in that** the washer (16) comprises a predetermined number of detachable protrusions (20).

5. Control device according to claim 1, **characterized in that** said means (15) indicating a value representing the current fatigue comprises a code (32) designed for identifying said instrument on an univocal way and for associating a value representing the current fatigue, and **in that** the said control device comprises a storage device (31) arranged for memorizing the value of the current fatigue of each instrument.

6. Control device according to claim 5, **characterized in that** it comprises a reading device (30) designed for reading said code (32).

7. Control device according to claim 5, **characterized in that** it comprises a stop washer (13), said code (32) being attached to this stop washer.

8. Control device according to claims 5 to 7, **characterized in that** said code is a bar code.

9. Method for controlling of the current fatigue of an odontological instrument having at least a cutting zone and a handle, **characterized in that** it comprises
• a step of determining a value representing the current fatigue of the odontological instrument,
• a step of determining of a value of fatigue corresponding to a specific use, depending of operational parameters of the instrument,
• a step of modifying the value representing the current fatigue according to the value of the fatigue for said specific use,
• a step of comparing the new modified value representing the current value of fatigue with a limit value.

10. Method according to claim 9, **characterized in that** the curve radius of the dental canal is taken as an operational parameter of the instrument.

11. Method according to claim 9, **characterized in that** the taper ratio of the instrument is taken as an operational parameter of the instrument.

12. Method according to claim 9, **characterized in that** the duration of the operation corresponding to said specific use is taken as an operational parameter of the instrument.

13. Method according to claim 9, in which the odontological instrument (10) comprises a washer (16) provided with pre-perforations (17), **characterized in that** the step of modifying the value representing the current fatigue consists in realizing a number of pre-perforations (17) depending of the value representing the fatigue induced by the specific use.

14. Method according to claim 9, in which the odontological instrument (10) comprises a washer (16) provided with detachable protrusions (20), **characterized in that** the step of determining the value of current fatigue of the odontological instrument consists in detaching a number of protrusions (20), this number depending of the value representing fatigue induced by the specific use.

15. Method according to claim 9, in which the odontological instrument (10) comprises a code (32), **characterized in that** the step of modifying the value representing the current fatigue consists in modifying the value representing the current fatigue in the storage device (31), according to the value representing the fatigue induced by the specific use.

## Patentansprüche

1. Vorrichtung zur Kontrolle der Ermüdung eines zahnheilkundlichen Instrumentes, welches mindestens eine Schneidezone (12) und einen Handgriff (11) umfasst,
**dadurch gekennzeichnet, dass**
es Einrichtungen aufweist, die so mit dem zahnheilkundlichen Instrument (10) verbunden sind, dass sie einen repräsentativen Wert für die tatsächliche Ermüdung des Instrumentes anzeigen, Einrichtungen zur Veränderung dieses Wertes in Abhängigkeit von mit seiner Benutzung in Verbindung stehenden Parametern und Einrichtungen zum Anzeigen aufweist, dass ein Schwellenwert erreicht ist.

2. Kontrollvorrichtung nach Anspruch 1,
**dadurch gekennzeichnet, dass**
die Einrichtungen (15) zum Anzeigen eines repräsentativen Wertes der tatsächlichen Ermüdung des Instrumentes (10) eine runde Scheibe (16,33) umfassen.

3. Kontrollvorrichtung nach Anspruch 2,
**dadurch gekennzeichnet, dass**
die runde Scheibe (16) eine zuvor festgelegte Anzahl an Vorperforationen (17) aufweist.

4. Kontrollvorrichtung nach Anspruch 2,
**dadurch gekennzeichnet, dass**
die runde Scheibe (16) eine zuvor festgelegte Anzahl abnehmbarer Protuberanzen (20) aufweist.

5. Kontrollvorrichtung nach Anspruch 1,
**dadurch gekennzeichnet, dass**
die Einrichtungen (15) zum Anzeigen eines für die tatsächliche Ermüdung repräsentativen Wertes einen Code (32) umfassen, der zur eindeutigen Erkennung des Instrumentes und dazu in der Lage ist, demselben einen für seine tatsächliche Ermüdung repräsentativen Wert zuzuordnen, und dass die Kontrollvorrichtung eine Speicherungsvorrichtung (31) umfasst, die zur Speicherung des Wertes der tatsächlichen Ermüdung eines jeden Instrumentes angeordnet ist.

6. Kontrollvorrichtung nach Anspruch 5,
**dadurch gekennzeichnet, dass**
es eine Lesevorrichtung (30) umfasst, die zum Lesen des Codes (32) angeordnet ist.

7. Kontrollvorrichtung nach Anspruch 5,
**dadurch gekennzeichnet, dass**
sie eine Sperrscheibe (13) umfasst, wobei der Code (32) auf dieser Sperrscheibe positioniert ist.

8. Kontrollvorrichtung nach den Ansprüchen 5 bis 7,
**dadurch gekennzeichnet, dass**
der Code ein Strichcode ist.

9. Verfahren zur Kontrolle der Ermüdung eines zahnheilkundlichen Instrumentes, welches aus mindestens einer Schneidezone und einem Handgriff ausgebildet ist,
**dadurch gekennzeichnet, dass**
es mindestens Folgendes umfasst:
• eine Stufe der Bestimmung eines repräsentativen Wertes für die tatsächliche Ermüdung des zahnheilkundlichen Instrumentes,
• eine Stufe der Bestimmung eines Ermüdungswertes für einen gegebenen Vorgang in Abhängigkeit von den Benutzungsparametern des Instrumentes,
• eine Stufe der Veränderung des repräsentativen Ermüdungswertes in Abhängigkeit von dem Ermüdungswert für den gegebenen Vorgang,
• eine Stufe des Vergleiches des neuen abgeänderten, für die tatsächliche Ermüdung repräsentativen Wertes mit einem Schwellenwert.

10. Kontrollverfahren nach Anspruch 9,
**dadurch gekennzeichnet, dass**
der Biegeradius des Zahnkanals als mit der Benutzung des Instrumentes in Verbindung stehender Parameter verwendet wird.

11. Kontrollverfahren nach Anspruch 9,
**dadurch gekennzeichnet, dass**
die Kegelform des Instrumentes als mit seiner Benutzung in Verbindung stehender Parameter verwendet wird.

12. Kontrollverfahren nach Anspruch 9,
**dadurch gekennzeichnet, dass**
die Dauer des gegebenen Vorganges als mit der Benutzung des Instrumentes in Verbindung stehender Parameter verwendet wird.

13. Kontrollverfahren nach Anspruch 9, in dem das zahnheilkundliche Instrument (10) eine mit Vorperforationen (17) versehene Scheibe (16) aufweist,
**dadurch gekennzeichnet, dass**
die Stufe der Veränderung des für die tatsächliche Ermüdung repräsentativen Wertes in der Perforation einer Anzahl von Vorperforationen (17) in Abhängigkeit von dem Ermüdungswert für den gegebenen Vorgang besteht.

14. Kontrollverfahren nach Anspruch 9, in dem das zahnheilkundliche Instrument (10) eine runde Scheibe (16) aufweist, die mit abnehmbaren Protuberanzen (20) versehen ist,
**dadurch gekennzeichnet, dass**
die Stufe der Veränderung des für die tatsächliche Ermüdung repräsentativen Wertes im Entfernen einer Anzahl von Protuberanzen (20) in Abhängigkeit von dem Ermüdungswert für den gegebenen Vorgang besteht.

15. Kontrollverfahren nach Anspruch 9, in dem das zahnheilkundliche Instrument (10) einen Code (32) umfasst,
**dadurch gekennzeichnet, dass**
die Stufe der Veränderung des für die tatsächliche Ermüdung repräsentativen Wertes in der Veränderung des Wertes der tatsächlichen Ermüdung in einer Speicherungsvorrichtung (31) in Abhängigkeit von dem Ermüdungswert für den gegebenen Vorgang besteht.
